## Europäisches Patentamt

## European Patent Office

## Office européen des brevets

(19)

(11) Veröffentlichungsnummer: **0 267 178**
**B1**

(12)

# EUROPÄISCHE PATENTSCHRIFT

(45) Veröffentlichungstag der Patentschrift:
07.02.90

(51) Int. Cl.⁴: **B65G 1/20**

(21) Anmeldenummer: **87890238.6**

(22) Anmeldetag: **30.10.87**

(54) Vorrichtung zum Lagern von Werkstücken annähernd gleicher Form und Grösse im Abstand übereinander.

(30) Priorität: **06.11.86 AT 2960/86**

(43) Veröffentlichungstag der Anmeldung:
**11.05.88 Patentblatt 88/19**

(45) Bekanntmachung des Hinweises auf die Patenterteilung:
**07.02.90 Patentblatt 90/6**

(84) Benannte Vertragsstaaten:
**CH DE FR IT LI NL SE**

(56) Entgegenhaltungen:
**DE-A- 2 930 053**
**DE-B- 1 122 000**

(73) Patentinhaber: **Austria Metall Aktiengesellschaft,
A-5282 Braunau am Inn(AT)**

(72) Erfinder: **Draxlbauer, Rainer, Schlossstrasse 1,
A-5282 Ranshofen(AT)**
Erfinder: **Falk, Friedrich, Mozartstrasse 56,
A-5280 Braunau(AT)**

(74) Vertreter: **Hain, Leonhard, Dipl.-Ing., Tal 18/IV,
D-8000 München 2(DE)**

ACTORUM AG

## Beschreibung

Die Erfindung betrifft eine Vorrichtung zum Lagern von Werkstücken annähernd gleicher Form und Größe im Abstand übereinander mit einem Gestell, an dem Aufnahmehebel um horizontale Lagerbolzen schwenkbar sind, wobei beim Auflegen eines Werkstückes auf in Aufnahmelage befindlichen Aufnahmehebel gleichzeitig der darüber angeordnete Aufnahmehebel aus seiner Ruhelage in seine Aufnahmelage geschwenkt wird. Eine Vorrichtung dieser Art ist bekannt (DE-A 2 930 053).

Bei den bekannten Stapelvorrichtungen liegt die Funktion im wesentlichen an Hebeln mit Doppelfunktion. Diese Hebel weisen einen Steuer- und einen Tragarm auf, wobei der Tragarm das Stapelgut aufnimmt und der Steuerarm bei Entladung durch sein Gewicht den Hebel in die Ruhelage dreht und bei Beladung durch seine Form den nächsten Hebel in die Aufnahmelage bewegt.

Das hat den Nachteil, daß für jeden erforderlichen Stapelabstand ein anderer Hebel benötigt wird, bzw. über komplizierte Gestänge, welche ebenfalls auf den entsprechenden Abstand abgestimmt werden müssen, die Bewegungen übertragen werden.

Aufgabe der Erfindung ist es, eine Einrichtung der eingangs angeführten Art zu schaffen, bei der mit gleichen Grundelementen verschiedene Werkstücke gestapelt werden können, d.h. die Abstände leicht variiert werden können und trotzdem eine Verriegelung aller Elemente im beladenen Zustand möglich ist, um bei Transportstößen ein ungewolltes Entstapeln zu vermeiden.

Diese Aufgabe wird dadurch gelöst, daß die Aufnahmehebel Zahnsegmente aufweisen, die mit vertikal auf einer Führungsstange verschieblichen Zahnstangenelementen im Eingriff stehen.

Bei der vorliegenden Erfindung hat der Aufnahmehebel nur die Funktion eines Traghebels, dessen Rückteil mit Zahnstangenelementen im Eingriff steht, welche auf einer vertikalen Stange aufgestapelt sind. Die Zahnstangenelemente bilden das Gegengewicht am Aufnahmehebel und bewirken bei Entladung, schwerkraftbedingt durch Abrutschen, das Hochklappen der Aufnahmehebel. Ein besonderer Vorteil liegt hier darin, daß mit den gleichen Aufnahmehebeln und Zahnstangenelementen ab einer gewissen Mindesthöhe eine Stapelsäule mit jedem beliebigen Abstand durch Aufnahme eines zusätzlichen und entsprechend langen Distanzstückes in Form eines Rohrabschnittes hergestellt werden kann. Außerdem kann durch Drehen der senkrechten Führungsstange eine einfache Verriegelung der Zahnstangenelemente erreicht werden. Dabei sei noch darauf hingewiesen, daß in der Stapelvorrichtung entweder die senkrechten Abstände der Aufnahmehebel gleich sind oder im Bedarfsfall unterschiedlich oder wechselnd ausgeführt werden können.

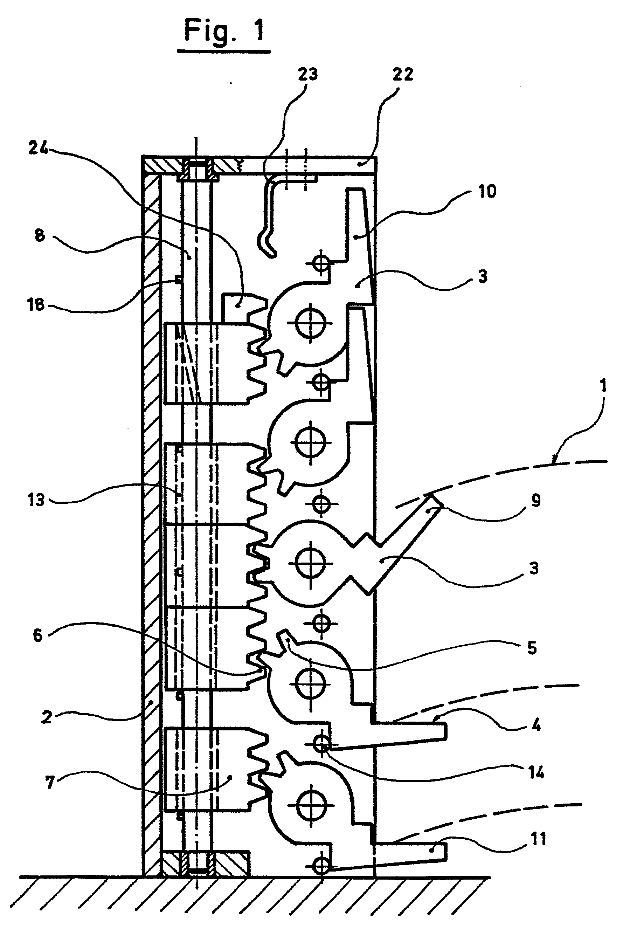

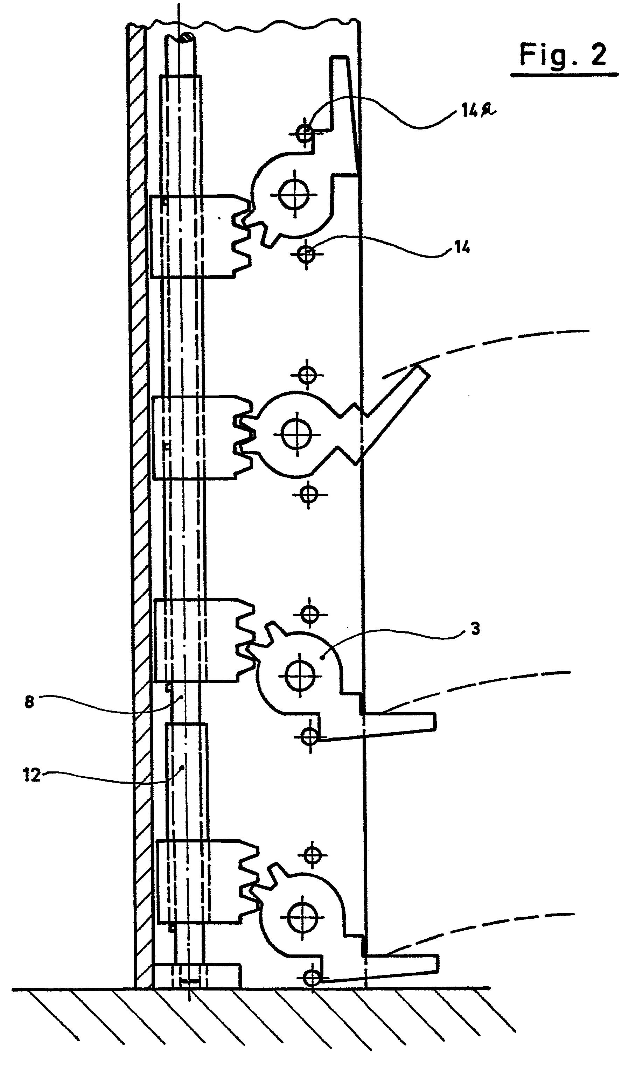

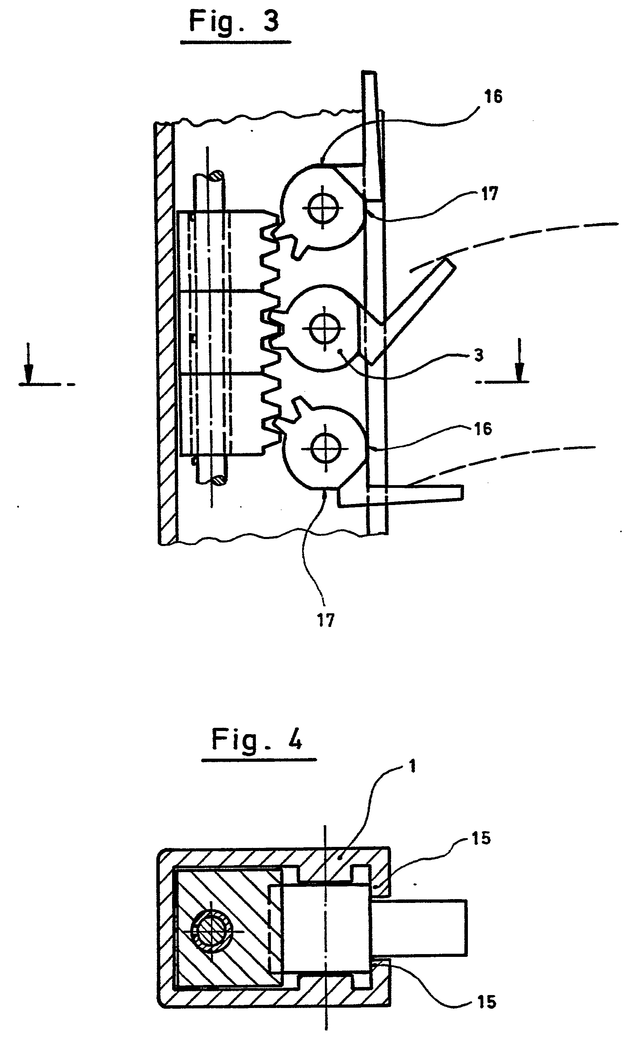

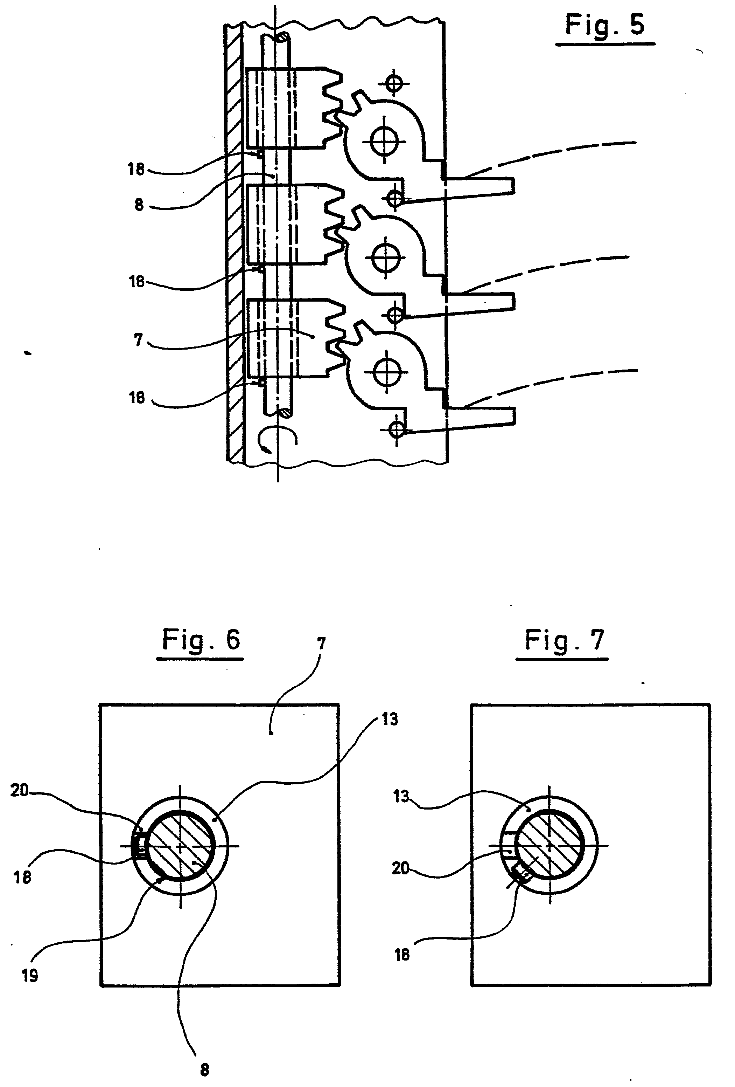

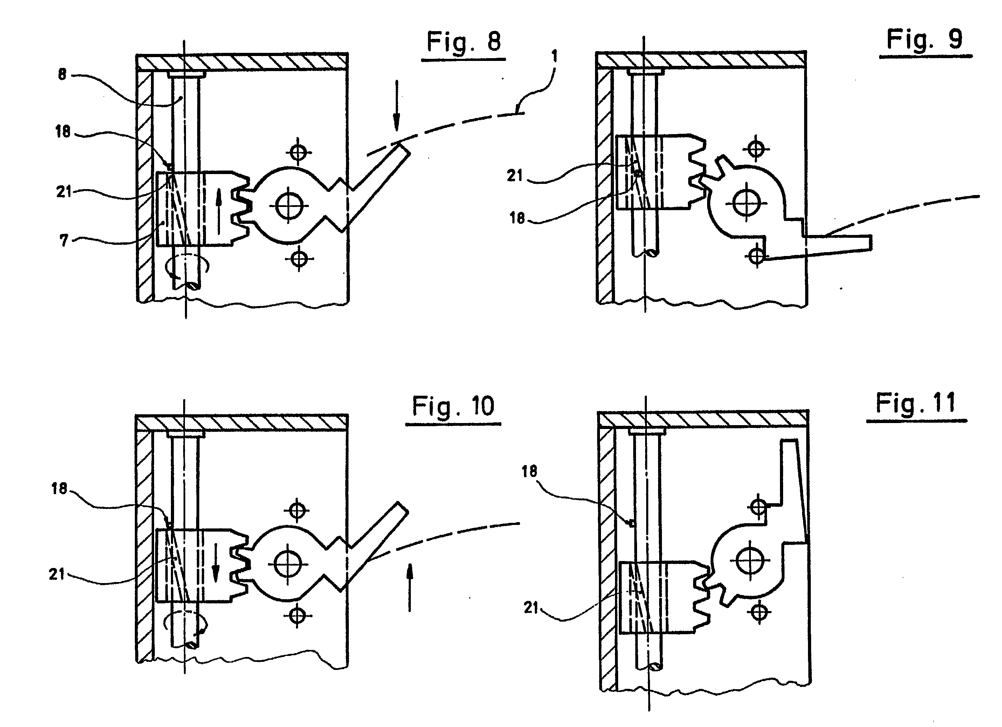

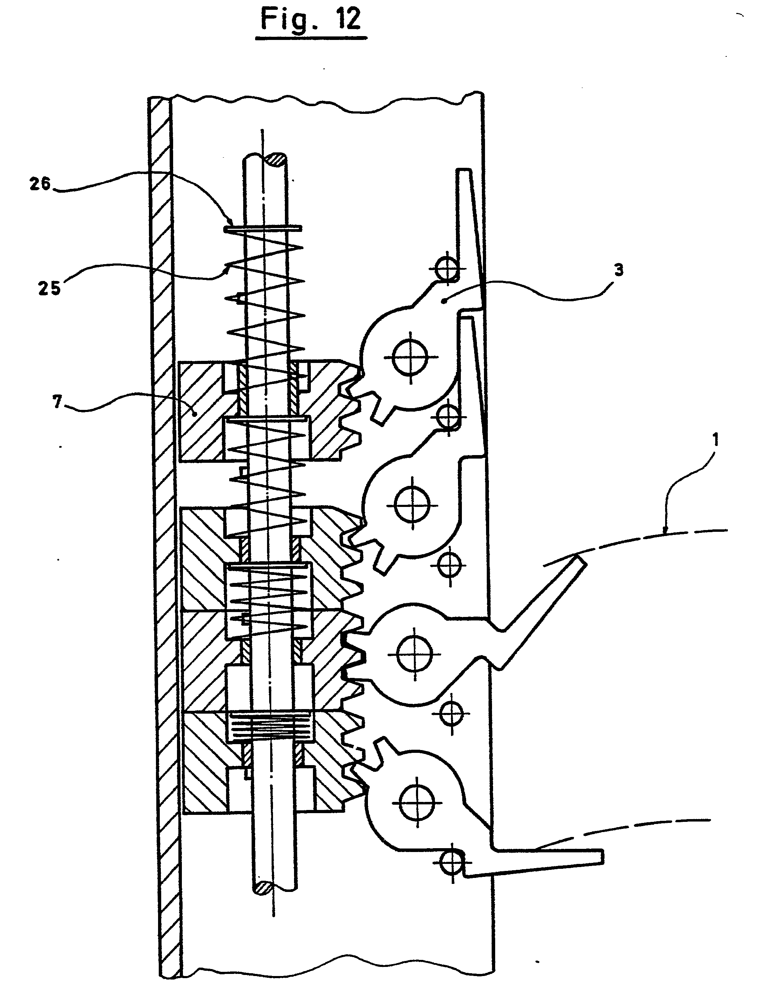

Der Gegenstand der Erfindung ist in den Zeichnungen dargestellt. Darin zeigt Fig. 1 die prinzipielle Anordnung der Aufnahmehebel und Zahnstangenelemente in allen Betriebsstellungen in der Ausführung mit dem kleinsten Abstand. Fig. 2 zeigt die gleiche prinzipielle Anordnung wie Fig. 1, jedoch mit einem geänderten Abstand der Aufnahmehebel durch die Einführung von Distanzstücken, Fig. 3 zeigt eine Alternative der Verriegelung der Aufnahmehebel in Ladestellung. Fig. 4 zeigt einen Horizontalschnitt der Fig. 3, wodurch die Formgebung des Steherprofils die Schwenkbegrenzung der Aufnahmehebel gezeigt wird. Fig. 5 zeigt die Verriegelung der Zahnstangenelemente mittels Zapfen an der senkrechten Führungsstange in horizontaler Ladestellung. Fig. 6 zeigt den Schnitt durch das Zahnstangenelement mit den Lagerbuchsen, welche geschlitzt sind, in nicht arretierter Stellung. Fig. 7 zeigt den Schnitt des Zahnstangenelementes mit dem Zapfen in verriegelter Stellung. Fig. 8 zeigt die automatische Verriegelung durch Drehen der senkrechten Führungsstange im ersten Teil der Drehung. Fig. 9 zeigt die Drehautomatik in Ladestellung. Fig. 10 zeigt den Entriegelungsvorgang. Fig. 11 zeigt die Stellung der automatischen Verriegelung in Ruhestellung und in Fig. 12 ist eine alternative Ausführung mit Federantrieb zur Rückstellung der Aufnahmehebel in ihre Ruhelage dargestellt.

Die Vorrichtung zum Lagern von Blechen, Blechformteilen 1, oder aber auch von Türen und Fenster, bzw. im wesentlichen flachen Lagerteilen gleichen Formates und Größe in gleichen oder unterschiedlichen Abständen übereinander umfaßt im wesentlichen ein nicht dargestelltes Gestell oder dgl., in dem vertikal angeordnete Profilsteher 2 verschiedener Form stehen. In diese Steherprofile 2 sind horizontal gelagerte Aufnahmehebel 3, vorzugsweise aus Al-Profilabschnitten oder Kunststoffteilen oder Guß- oder Preßteile oder ähnliches, in gleichen oder unterschiedlichen Abständen übereinander angebracht. Wie Fig. 1 zeigt, bestehen diese Aufnahmehebel aus einem Aufnahmeteil 4, auf dem die Teile zu liegen kommen. An der Rückseite der Aufnahmehebel 3 ist eine Verzahnung 5, welche in die Verzahnung 6 eines Zahnstangenelementes 7, vorzugsweise aus Aluminiumpreßprofilen oder Gußteilen, eingreift. Die Verzahnung 6 ist dabei in jeder Stellung im gegenseitigen Eingriff. Die einzelnen Zahnstangenelemente sind vertikal auf einer Führungsstange 8 aufgestapelt.

Die Ladung der Blechteile 1 erfolgt händisch oder durch Roboter. Dabei wird durch das Eigengewicht des Blechteiles 1 der in Aufnahmestellung 9 stehende schräg liegende Aufnahmehebel 3 nach unten bis zum Anschlag 14, vorzugsweise ein quer eingesteckter Bolzen, gedrückt. Durch die Verzahnung 5, 6 wird dabei das Zahnstangenelement 7, welches als Gegengewicht für den Aufnahmehebel 3 dient, entlang der Führungsstangen 8 hochgeschoben, das nächste Zahnstangenelement mitgenommen und dabei wird über die Verzahnung 5, 6 der nächste Aufnahmehebel wieder in Aufnahmestellung gebracht. Bei der Entnahme des Blechteiles 1 wird der Aufnahmehebel 3 durch das nach unten ziehende Gewicht des Zahnstangenelementes 7 über die Verzahnung 5, 6 in Aufnahmestellung 9 hochgeschoben und liegt dabei am Zahnstangenelement 7 des nächst unteren auf. Wird auch dieser Aufnahmehebel 3 entladen, so geht dieser Aufnahmehebel wieder in Aufnahmestellung und der erste in die Ruhelage 10.

Der Abstand der Zahnstangenelemente 3 richtet sich nach der Länge der Verzahnung. Der Mindestabstand ist dabei genau die Bogenlänge der Eingriffslinie der Verzahnung bei der Drehung des Aufnahmehebels 3 um ca. 90 Grad. (Arbeitslage 11 bis Ruhelage 10.)

Die Möglichkeit, die Abstände der Aufnahmehebel zu vergrößern, wird durch Distanzstücke 12 in Form von Rohrabschnitten gemäß Fig. 2 erreicht. Hiebei wird die Funktion, wie in Fig. 1 beschrieben, aufrecht erhalten. Die Distanzstücke 12 sind entweder nur einfach zwischen die Zahnstangenelemente gesteckt oder die Gleitbuchsen 13 gemäß Fig. 6 und Fig. 7 werden entsprechend verlängert. Hiebei wird durch die Distanzstücke der Kontakt zum nächsten Zahnstangenelement 3 hergestellt. In Ruhestellung der Stapelsäule ist ein weiterer horizontaler Bolzen 14a als Anschlag vorgesehen.

Eine weitere Variante des Anschlages wird in Fig. 3 gezeigt. Hiebei entfallen die quer gelegten Anschlagbolzen 14 und 14a.

Andererseits muß hier das Steherprofil 2 einen entsprechenden Anschlag 15 aufweisen. Die Schulter 16 an dem Aufnahmehebel 3 liegt bei Arbeitslage 11 dabei am Anschlag des Steherprofiles auf, die Schulter 17 bei geschlossener Stellung.

In Fig. 5 wird die Verriegelung erläutert. Beim Transport des gefüllten Stpalegestelles können infolge von Bodenunebenheiten die aufliegenden Blechteile aufschwingen, wodurch sich ein Aufnahmehebel von selbst hochstellen kann. Aus diesem Grund ist die senkrechte Führungsstange 8 zur Sicherung gegen das Hochklappen der Aufnahmehebel 3, mit entsprechenden Zapfen 18 versehen. Wird das oberste Blech beladen, so wird dann automatisch die Führungsstange gedreht und der Zapfen 18 verhindert dann das Absenken des Zahnstangenelementes. Fig. 6 und 7 zeigen die Gleitbuchse 13, vorzugsweise ein Schlitzrohr und innen mit einer glatten Auskleidung 19 zur besseren Führung der Zahnstangenelemente in der Führung entlang des Schlitzes 20 im Schlitzrohr. Beim Drehen (Fig. 7) der senkrechten Führungsstange 8 wird dann das Zahnstangenelement verriegelt.

Eine automatische Verriegelung, d.h. der Drehvorgang erfolgt gemäß Fig. 8 - 11 automatisch während des letzten Ladevorganges. Hiebei wird beim Hochheben des letzten Zahnstangenelementes 7 die Führungsstange 8 dadurch gedreht, daß der Schlitz 20 der Gleitbuchse entsprechend einer Schraubenlinie 21 ausgeführt ist. Dadurch dreht der in die senkrechte Führungsstange 8 eingesetzte Zapfen 18 diese. Die Drehung erfolgt während die Aufnahmehebel 3 von der Arbeitslage 11 bis zur Ruhestellung 10 bewegt werden. Die Entriegelung erfolgt wiederum automatisch. Sobald das zweite Blech von oben abgehoben wird, streift dieses den obersten Aufnahmehebel 3 und drückt ihn nach oben. Dabei wird die Führungsstange 8 wieder zurückgedreht und es erfolgt hiebei die automatische Entriegelung. Als zusätzliche Sicherung der Verriegelung ist im Deckel 22 der Stapelsäule, wie Fig. 1 zeigt, ein Federelement 23 befestigt, in welches beim hochgehobenen obersten Zahnstangenelement eine Klinke 24 einrastet und das oberste Zahnstangenelement so gegen unbeabsichtigtes Herunterrutschen und dabei am Drehen der Führungsstange 8 hindert. Die Lösung dieser Sicherung erfolgt über das Hochheben des Blechteiles 1, wie Fig. 10 zeigt.

Die Rückstellung des Aufnahmehebels in die Ruhelage 10 ist jedoch nicht auf dieses durch Schwerkraft angetriebene Ausführungsbeispiel beschränkt. Sie kann auch durch Federkraft bewirkt werden, wie Fig. 12 zeigt. Um eine Rückstellung der Zahnstangenelemente 7 bzw. der Aufnahmehebel 3 durch Federkraft zu erreichen, wird zwischen den Zahnstangenelementen 7 je eine Feder 25 gesetzt. Diese Feder 25 wird, um einen Gegendruck nach oben zu verhindern, durch eine Scheibe 26 festgehalten.

Nach Abheben der Last 1 von dem Aufnahmehebel 3 drückt die Feder 25 das Zahnstangenelement 7 so weit nach unten, bis dieses auf dem unter ihm liegenden Zahnstangenelement zu liegen kommt. Erst wenn die nächste Last abgehoben wird, drückt die Feder 25 das Zahnstangenelement in Ruhelage 10.

Die Federn 25 können jedoch auch als Spiraloder Schraubenfedern an den Aufnahmehebeln ausgeführt sein.

## Patentansprüche

1. Vorrichtung zum Lagern von Werkstücken annähernd gleicher Form und Größe im Abstand übereinander mit einem Gestell, an dem Aufnahmehebel (3) um horizontale Lagerbolzen schwenkbar sind, wobei beim Auflegen eines Werkstückes auf in Aufnahmelage befindliche Aufnahmehebel gleichzeitig der darüber angeordnete Aufnahmehebel aus seiner Ruhelage in seine Aufnahmelage geschwenkt wird, dadurch gekennzeichnet, daß die Aufnahmehebel (3) Zahnsegmente (5) aufweisen, die mit vertikal auf einer Führungsstange (8) verschieblichen Zahnstangenelementen (7) im Eingriff stehen.

2. Vorrichtung nach Anspruch 1, dadurch gekennzeichnet, daß der Mindestabstand der Aufnahmehebel (3) mit der Bogenlänge der Verzahnung (5) am Aufnahmehebel (3) übereinstimmt.

3. Vorrichtung nach Anspruch 1 oder 2, dadurch gekennzeichnet, daß der Abstand der Aufnahmehebel (3) untereinander durch Distanzstücke (12) zwischen den Zahnstangenelementen (7) oder durch Verlängerung der Gleitbuchsen (13) der Zahnstangelemente (7) vergrößert ist.

4. Vorrichtung nach einem der Ansprüche 1 bis 3, dadurch gekennzeichnet, daß die Verriegelung der Aufnahmehebel (3) durch Drehen der senkrechten Führungsstange (8) erfolgt, wobei an der Führungsstange (8) angeordnete Zapfen (18) die Zahnstangenelemente (7) untergreifen.

5. Vorrichtung nach Anspruch 3 oder 4, dadurch gekennzeichnet, daß die Gleitbuchse (13) einen Schlitz aufweist, in welchem der Zapfen (18) der senkrechten Führungsstange (8) laufen kann.

6. Vorrichtung nach Anspruch 4 oder 5, dadurch gekennzeichnet, daß die Verdrehung der Führungsstange (8) bei Bewegung des obersten Aufnahmehebels (3) in die Ladestellung automatisch dadurch erfolgt, daß der Schlitz (20) der Gleitbuchse (13) des entsprechenden Zahnstangenelementes (7) eine Schraubenwindung aufweist, in welcher der Zapfen (18) der Führungsstange (8) diese bei Beladung des letzten Aufnahmehebels (3) dreht.

7. Vorrichtung nach einem der Ansprüche 1 bis 6, dadurch gekennzeichnet, daß zur Sicherung des obersten Aufnahmehebels (3) das entsprechende Zahnstangenelement (7) eine Klinke (24) aufweist, die in einem an der Säule (2) befestigten Federteil (23) einrastet.

8. Vorrichtung nach einem der Ansprüche 1 bis 7, dadurch gekennzeichnet, daß zur Rückstellung der Aufnahmehebel (3) in deren Ruhelage anstelle des Gewichtes der Zahnstangenelementes (7) ein Federantrieb dient, wobei die Federn (25) vorzugsweise zwischen den Zahnstangenelementen (7) angeordnet sind.

## Claims

1. Device for storing objects of near similar shapes and dimensions at intervals one upon the other with a bench where receiving levers (3) can be pivoted around horizontal bearing bolts, at which, when an object is placed onto receiving levers being in the receiving condition, the receiving lever positioned above is pivoted simultaneously from its quiescent condition into its receiving condition, characterized in that the receiving levers (3) have tooth quadrants (5) which are in constant mesh with toothed rack elements (7) being movable vertically on a guiding rod (8).

2. Device according to claim 1, characterized in that the minimum interval between the receiving levers (3) corresponds to the curve length of the toothing (5) of the receiving lever (3).

3. Device according to claim 1 or 2, characterized in that the interval between the receiving levers (3) is enlarged by means of separators (12) between the toothed rack elements (7) or by means of extensions of the slide bushes (13) of the toothed rack elements (7).

4. Device according to one of the claims 1 to 3, characterized in that interlocking of the receiving levers (3) is obtained by turning the vertical guiding rod (8), tappets (18) positioned on the guiding rod (8) sliding beneath the toothed rack elements (7).

5. Device according to claim 3 or 4, characterized in that the slide bush (13) has a slot in which the tappet (18) of the vertical guiding rod (8) can run.

6. Device according to claim 4 or 5, characterized in that the rotation of the guiding rod (8) during the movement of the top receiving lever (3) into the loading condition is obtained automatically in that the slot (29) of the slide bush (13) of the respective toothed rack element (7) has a helical thread in which the tappet (18) of the guiding rod (8) turns the latter while the last receiving lever (3) is being loaded.

7. Device according to one of the claims 1 to 6, characterized in that for securing the top receiving lever (3) the respective toothed rack element (7) has a catch (24) which catches in a spring-type element (23) mounted on the pillar (2).

8. Device according to one of the claims 1 to 7, characterized in that a spring drive serves for resetting the receiving levers (3) into their quiescent condition instead of the weight of the toothed rack element (7), the springs (25) being preferably positioned between the toothed rack elements (7).

## Revendications

1. Dispositif pour entreposer, avec des intervalles, des pièces de forme et de dimensions à peu près similaires, les unes sur les autres, avec un bâti sur lequel des leviers de réception (3) peuvent pivoter autour d'axes d'appui horizontaux où, lors de la mise en place d'une pièce sur un levier de réception se trouvant en position de réception, le levier de réception disposé au-dessus pivote simultanément de sa position de repos à sa position de réception, dispositif caractérisé en ce que les leviers de réception (3) présentent des segments dentés (5), qui sont en prise avec des éléments (7) à crémaillère mobiles verticalement sur une tige (8) de guidage.

2. Dispositif selon la revendication 1, caractérisé en ce que l'intervalle minimal entre les leviers de réception (3) correspond à la longueur d'arc de la denture (5) du levier de réception (3).

3. Dispositif selon la revendication 1 ou 2, caractérisé en ce que l'intervalle entre les leviers de réception (3) est augmenté, au moyen d'éléments d'écartement (12) disposés entre les éléments (7) à crémaillère ou en rallongeant les manchons (13) de glissement des éléments (7) à crémaillère.

4. Dispositif selon l'une des revendications 1 à 3, caractérisé en ce que le verrouillage des leviers de réception (3) est obtenu par rotation de la tige (8) verticale de guidage, en même temps que des tenons (18) disposés sur la tige (8) de guidage arrêtent par en-dessous les éléments (7) à crémaillère.

5. Dispositif selon la revendication 3 ou 4, caractérisé en ce que le manchon (13) de glissement présente une fente dans laquelle peut passer le tenon (18) de la tige (8) verticale de guidage.

6. Dispositif selon la revendication 4 ou 5, caractérisé en ce que la rotation de la tige (8) de guidage, lors du déplacement du levier de réception (3) supérieur en position de chargement, est effectuée automatiquement en raison de ce que la fente (20) du manchon (13) de glissement de l'élément (7) à crémaillère correspondant présente une forme hélicoïdale selon laquelle le tenon (18) de la tige (8) de guidage fait tourner cette tige lors du chargement du dernier levier de réception (3).

7. Dispositif selon l'une des revendications 1 à 6, caractérisé en ce que, pour arrêter le levier de réception (3) supérieur, l'élément (7) à crémaillère correspondant présente un cliquet (24), qui s'encrante sur un élément de ressort (23) fixé sur la colonne (2).

8. Dispositif selon l'une des revendications 1 à 7, caractérisé en ce qu'une commande par ressort sert pour le rappel des leviers de réception (3) en leur position de repos au lieu de l'action du poids de l'élément (7) à crémaillère, les ressorts (25) étant de préférence disposés entre les éléments (7) à crémaillère.

## Fig. 1

Fig. 2

EP 0 267 178 B1

## Fig. 3

## Fig. 4

EP 0 267 178 B1

Fig. 5

18

8

18

7

18

Fig. 6

7

13

20

18

19

8

Fig. 7

13

20

18

Fig. 8

Fig. 9

Fig. 10

Fig. 11

8
18
21
7

21
18

18
21

18
21

1

EP 0 267 178 B1

## Fig. 12